# EUROPÄISCHE PATENTSCHRIFT

(11) **EP 1 894 935 B1**
(45) Veröffentlichungstag und Bekanntmachung des Hinweises auf die Patenterteilung: **22.10.2008**
(21) Anmeldenummer: 07113877.0
(22) Anmeldetag: 06.08.2007
(51) Int. Cl.: C07F 7/14

(54) **Kontinuierliche Herstellung von Organosilanen**
Continuous preparation of organosilanes
Production continue d'organosilanes

(30) Priorität: 21.08.2006 DE 102006039191
(43) Veröffentlichungstag der Anmeldung: 05.03.2008
(73) Patentinhaber: Wacker Chemie AG, 81737 München (DE)
(72) Erfinder: Geisberger, Gilbert, Dr., 84503, Altötting (DE); Auer, Marco, Dr., 22087, Hamburg (DE); Großmann, Armin, 84561, Mehring-Öd (DE)
(74) Vertreter: Budczinski, Angelika

(56) Entgegenhaltungen:
- EP-A1- 1 316 557

## Beschreibung

Die Erfindung betrifft ein Verfahren zur kontinuierlichen Herstellung von Organosilanen in einer Reaktivdestillationskolonne.

Funktionalisierte Organosilane sind von großer wirtschaftlicher Bedeutung, insbesondere Halogensubstituierte, da sie als Ausgangsprodukte für die Herstellung von vielen wichtigen Produkten dienen, beispielsweise Silicone, Haftvermittler, Hydrophobierungs- und Bautenschutzmittel.

Die Herstellung von siliciumorganischen Verbindungen erfolgt beispielsweise über die sogenannte Hydrosilylierungsreaktion. Dabei wird die Si-H-Funktion unter Einfluss von Katalysatoren an beispielsweise Alkene addiert. Man unterscheidet dabei zwischen homogener und heterogener Hydrosilylierung. Bei der homogenen Hydrosilylierung werden lösliche Katalysatoren verwendet, bei der heterogenen Hydrosilylierung verwendet man beispielsweise elementares Platin oder an Träger gebundene Katalysatoren. Ein wichtiges Problem stellt die Bildung von Nebenprodukten dar, die beispielsweise zu Halogensilanen und Alkenen führt und somit eine geringere Ausbeute an Produkt bedingt.

Die Patentanmeldung EP 0 823 434 A1 beschreibt ein kontinuierliches Verfahren zur Herstellung von 3-Halogen-Propyl-Organosilanen, bei dem die Bildung von Nebenprodukten unterdrückt werden soll. Dies wird dadurch erreicht, dass die Reaktion mit einem Teilumsatz der Edukte durchgeführt wird. Dabei erfolgt die Abtrennung des Nebenprodukts Propen simultan im Reaktor oder nachgeschaltet mittels mindestens einer Trennstufe. Nachteilig an diesem Verfahren sind die höheren Kosten des Verfahrens, die mit der Rückführung nicht umgesetzter Edukte verbunden sind.

Die Patentanmeldung DE 34 04 703 A1 beschreibt ein Verfahren zur Herstellung von 3-Chlorpropyltrichlosilan mit einem speziellen Platin-haltigen heterogenen Katalysator mit höherer Selektivität unter gleichzeitiger Propenabtrennung. Der Nachteil dieses Verfahrens liegt in der sehr aufwendigen und damit teuren Herstellung des heterogenen Katalysators.

Die Patentanmeldungen DE 100 53 037 C1 und DE 102 32 663 C1 beschreiben Verfahren, welche auf speziellen Iridiumkatalysatoren mit Dien als Co-Katalysator beruhen. Nachteilig ist hier, dass wegen der geringeren katalytischen Aktivität eine entsprechend hohe Edelmetallkonzentration notwendig ist.

Die Patentanmeldung DE 101 53 795 A1 beschreibt ein Verfahren in einer Reaktivdestillationskolonne unter der Verwendung von heterogenen Platinkatalysatoren. Nachteilig sind die bekannten Probleme bei heterogener Katalyse wie geringerer Umsatz bei nachlassender Katalysator-Aktivität. Zudem ist bei zu geringer Aktivität ein Katalysator-Austausch notwendig, welcher mit Anlagenstillstand und Produktionsausfall verbunden ist.

Aufgabe war es daher, ein verbessertes kontinuierliches Verfahren zur Verfügung zu stellen, welches gleich bleibend hohe Umsätze ermöglicht.

Gegenstand der Erfindung ist ein Verfahren zur kontinuierlichen Herstellung von Silan der allgemeinen Formel (I)

R⁶R⁵CH-R⁴CH-SiR¹R²R³ (I),

bei dem Silan der allgemeinen Formel (II)

HSiR¹R²R³ (II),

mit Alken der allgemeinen Formel (III)

R⁶R⁵CH=CHR⁴ (III),

wobei
**R¹, R², R³** einen einwertigen Si-C gebundenen, unsubstituierten oder halogensubstituierten C₁-C₁₈-Kohlenwasserstoff-, Chlor-, oder C₁-C₁₈-Alkoxyrest,
**R⁴**, **R**⁵, **R**⁶ ein Wasserstoffatom, einen einwertigen unsubstituierten oder mit F, Cl, O**R**, N**R**₂, CN oder NCO substituierten C₁-C₁₈-Kohlenwasserstoff-, Chlor-, Fluor- oder C₁-C₁₈-Alkoxyrest, wobei jeweils 2 Reste von **R⁴, R⁵, R⁶** gemeinsam mit den Kohlenstoffatomen, an die sie gebunden sind, einen zyklischen Rest bilden können,
**R** ein Wasserstoffatom, einen einwertigen C₁-C₁₈-Kohlenwasserstoffrest
   bedeuten,
in Gegenwart mindestens eines homogenen Edelmetallkatalysators umgesetzt wird, dadurch gekennzeichnet, dass die Umsetzung in einer Reaktivdestillationskolonne erfolgt.

Das kontinuierliche Verfahren liefert das Silan der allgemeinen Formel (I) in hohen Ausbeuten und hervorragender Reinheit.

Im Vergleich zum Stand der Technik, wie beispielsweise auch in Reactive Distilliation, Status and Future Directions, Kai Sundmacher and Achim Kienle, Wiley-VHC, 2002, ISBN 3527305793, Seite 187, Abschnitt 7.5 beschrieben, zeigt das erfindungsgemäße Verfahren wesentliche Vorteile gegenüber der heterogenen Katalyse, bei der es kaum möglich ist, die widersprüchlichen Anforderungen an Katalysatorverweilzeit, Druckgefälle und gutem Dampf-Flüssigkeitskontakt zu erfüllen. Beim erfindungsgemäßen Verfahren kann, durch den Einsatz der homogenen Katalyse, sowohl die Menge als auch der Zugabeort des Katalysators variiert werden. Damit ist das Verfahren wesentlich leichter zu steuern und zu kontrollieren und wesentlich sicherer in der Durchführung. Die Ausbeuten können zudem wesentlich dadurch erhöht werden, dass das Alken der allgemeinen Formel (III) rückgeführt wird.

Als technische Ausführungen zur Durchführung des Verfahrens eignen sich alle üblichen Destillationskolonnen zur kontinuierlichen Reaktionsführung.

C₁-C₁₈-Kohlenwasserstoffreste **R¹**, **R², R³** bedeuten vorzugsweise Alkyl-, Alkenyl-, Cycloalkyl- oder Arylreste. Vorzugsweise weisen **R¹, R², R³** höchstens 10, insbesondere höchstens 6 Kohlenstoffatome auf. Vorzugsweise sind **R¹, R², R³** geradkettige oder verzweigte C₁-C₆-Alkylreste oder C₁-C₆-Alkoxyreste. Bevorzugte Halogensubstituenten sind Fluor und Chlor. Besonders bevorzugt als **R¹, R², R³** sind die Reste Methyl, Ethyl, Methoxy, Ethoxy, Chlor, Phenyl und Vinyl.

**R⁴, R⁵, R⁶** bedeuten ein Wasserstoffatom, einen einwertigen unsubstituierten oder mit F, Cl, O**R,** N**R**₂, CN oder NCO substituierten C₁-C₁₈-Kohlenwasserstoff-, Chlor-, Fluor- oder C₁-C₁₈-Alkoxyrest, wobei jeweils 2 Reste von **R⁴, R⁵, R⁶** gemeinsam mit den Kohlenstoffatomen, an die sie gebunden sind, einen zyklischen Rest bilden können. Vorzugsweise weisen **R⁵, R⁶** höchstens 10, insbesondere höchstens 6 Kohlenstoffatome auf. Vorzugsweise weisen **R⁵, R⁶** höchstens 10, insbesondere höchstens 6 Kohlenstoffatome auf. Vorzugsweise sind **R⁵, R⁶** geradkettige oder verzweigte C₁-C₆-Alkylreste oder C₁-C₆-Alkoxyreste. Besonders bevorzugt als **R⁵, R⁶** sind die Reste Wasserstoff, Methyl, Ethyl, Chlormethyl, Chlor und Phenyl.

Vorzugsweise weist Kohlenwasserstoffrest **R**⁴ höchstens 6, insbesondere höchstens 2 Kohlenstoffatome auf. Besonders bevorzugt als **R**⁴ sind die Reste Wasserstoff, Methyl, Ethyl.

Vorzugsweise weist Kohlenwasserstoffrest **R** höchstens 6, insbesondere höchstens 2 Kohlenstoffatome auf.

Als Alken der allgemeinen Formel (III) wird bevorzugt Allylchlorid verwendet.

Das Alken der allgemeinen Formel (III) kann sowohl im Überschuss als auch im Unterschuss zur Silankomponente (II) eingesetzt werden. Vorzugsweise liegt das Molverhältnis des Alkens (III) zu Silan (II) zwischen 0,1 und 20. Besonders bevorzugt zwischen 0,8 und 1,5.

Bei dem erfindungsgemäßen Verfahren können als homogene Katalysatoren alle Katalysatoren eingesetzt werden, die auch bisher zur Addition von Si-gebundenem Wasserstoff an aliphatisch ungesättigte Verbindungen eingesetzt wurden. Beispiele für solche Katalysatoren sind Verbindungen oder Komplexe der Gruppe der Edelmetalle enthaltend Platin, Ruthenium, Iridium, Rhodium und Palladium, wie beispielsweise Platinhalogenide, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆·6H₂O und Cyclohexanon, Platin-Vinylsiloxankomplexe, insbesondere Platin-Divinyltetramethyldisiloxankomplexe mit oder ohne Gehalt an nachweisbarem anorganisch gebundenen Halogen, Bis-(γ-picolin)-platindichlorid, Trimethylendipyridinplatindichlorid, Dicyclopentadienplatindichlorid, Dimethylsulfoxidethylenplatin-(II)-dichlorid sowie Umsetzungsprodukte von Platintetrachlorid mit Olefin und primärem Amin oder sekundärem Amin oder primärem und sekundärem Amin, wie beispielsweise das Umsetzungsprodukt aus in 1-Octen gelöstem Platintetrachlorid mit sec.-Butylamin. In einer weiterhin bevorzugten Ausführungsform des erfindungsgemäßen Verfahrens werden Komplexe des Iridiums mit Cyclooctadiene, wie beispielsweise p-Dichloro-bis(cyclooctadien)-diiridium(I), verwendet.

Vorzugsweise handelt es sich bei dem Katalysator um Verbindungen oder Komplexe des Platin und Iridium, besonders bevorzugt Platin, bevorzugt um Platinchloride und Platinkomplexe, insbesondere um Platin-Olefin-Komplexe und besonders bevorzugt um Platin-Divinyltetramethyldisiloxankomplexe.

In einer weiteren Ausführungsform können Co-Katalysatoren die Reaktion unterstützen.

Bei dem erfindungsgemäßen Verfahren wird Katalysator in Mengen von 1 bis 1000 Gewichts-ppm, berechnet als elementares Edelmetall und bezogen auf das Gesamtgewicht der in den Massen vorliegenden Komponente (II) und (III), eingesetzt. Bevorzugt werden 2 bis 150 Gewichts-ppm, besonders bevorzugt 5 bis 50 Gewichts-ppm eingesetzt.

Bei dem erfindungsgemäßen Verfahren wird die Menge an aktivem Katalysator durch kontinuierliche Zugabe von frischem Katalysator und gleichzeitigem Abzug von verbrauchtem Katalysator auf dem gewünschten Niveau gehalten. Somit wird ein Aktivitätsverlust in der Reaktion und damit ein Anlagenstillstand zum Katalysatoraustausch verhindert.

Der entscheidende Vorteil des erfindungsgemäßen Verfahrens ist die kontinuierliche Dosierung des Katalysators in die Reaktivdestillationskolonne. Beim erfindungsgemäßen Verfahren hat man eine erweiterte Einflussnahme auf Reaktions- und Betriebsführung durch die zusätzliche Regelgröße der Katalysator-Zugabe. Durch Art, Ort und Menge an Katalysator wird der Prozess besser steuerbar. Dies führt beispielsweise zu besserer Trennwirkung der Kolonne, Vermeidung von Hot Spots (Nebenreaktionen, thermische Kat-Zersetzung), die Schwankungen der Katalysatoraktivitäten unterschiedlicher Chargen werden vermieden, es ist ein schnelles Stoppen der Reaktion durch Abschalten der Katalysator-Zugabe möglich (Notabschaltung). Weiterhin ermöglicht das erfindungsgemäße Verfahren ein vereinfachtes Anfahren der Reaktivdestillation, da die Katalysator-Zugabe erst nach Erreichen des notwendigen Kolonnenprofils erfolgt. Auch ist der Produktwechsel in einer Kolonne vereinfacht, da zum Katalysator-Wechsel das Spülen der Anlage ausreicht und somit keine Demontage mehr notwendig ist.

Das Verfahren kann in Anwesenheit oder in Abwesenheit von aprotischen Lösungsmitteln durchgeführt werden. Falls aprotische Lösungsmittel verwendet werden, sind Lösungsmittel oder Lösungsmittelgemische mit einem Siedepunkt bzw. Siedebereich von bis zu 120°C bei 0,1 MPa bevorzugt. Beispiele für solche Lösungsmittel sind Ether, wie Dioxan, Tetrahydrofuran, Diethylether, Diisopropylether, Diethylenglycoldimethylether; chlorierte Kohlenwasserstoffe, wie Dichlormethan, Trichlor-methan, Tetrachlormethan, 1,2-Dichlorethan, Trichlorethylen; Kohlenwasserstoffe, wie Pentan, n-Hexan, Hexan-Isomerenge-mische, Heptan, Oktan, Waschbenzin, Petrolether, Benzol, Toluol, Xylole; Ketone, wie Aceton, Methylethylketon, Di-isopropylketon, Methylisobutylketon (MIBK) ; Ester, wie Ethylacetat, Butylacetat, Propylpropionat, Ethylbutyrat, Ethyl-isobutyrat; Schwefelkohlenstoff und Nitrobenzol, oder Gemische dieser Lösungsmittel.

Als aprotisches Lösungsmittel kann im Verfahren auch das Zielprodukt der allgemeinen Formel (I) eingesetzt werden. Diese Verfahrensvariante ist bevorzugt.

Bevorzugt werden die Edelmetallkatalysatoren in Lösungsmitteln gelöst, besonders bevorzugt in ionischen Flüssigkeiten. Dies ermöglicht die Zugabe des Katalysators teilweise oder sogar komplett in Feedströmen. Bei der Verwendung von ionischen Flüssigkeiten ist das besonders bevorzugte Lösungsmittel eine ionische Flüssigkeit der allgemeinen Formel (IV).

In einer bevorzugten Ausführungsform des Verfahrens gemäß dieser Erfindung wird als ionische Flüssigkeit eine ionische Flüssigkeit der allgemeinen Formel (IV) eingesetzt

[A]⁺ [Y]⁻ (IV)

wobei
- [Y]⁻: ein Anion ausgewählt wird aus der Gruppe enthaltend [Tetrakis-(3,5-bis-(trifluormethyl)-phenyl)borat], ([BARF]), Tetrafluoroborat ([BF₄]⁻), Hexafluorophosphat ([PF₆]⁻), Trispentafluoroethyltrifluorophosphat (I[P(C₂F₅)₃F₃]⁻), Hexafluoroantimonat ([SbF₆]⁻), Hexafluoroarsenat ([AsF₆]⁻ ), Fluorosulfonat, [R'-COO]⁻, [R'-SO₃]⁻, [R'-O-SO₃]⁻ , [R'₂-PO₄]⁻, oder [(R'-SO₂)₂N]-, wobei R' ein linearer oder verzweigter 1 bis 12 Kohlenstoffatome enthaltender aliphatischer oder alicyclischer Alkyl-, ein C5-C18-Aryl- oder ein C5-C18-Aryl-Cl-C6-alkyl-Rest ist, dessen Wasserstoffatome vollständig oder teilweise durch Fluoratome substituiert sein können, und
- [A]⁺: ein Kation ausgewählt wird aus der Gruppe enthaltend Ammonium-Kationen der allgemeinen Formel (V)

[NR⁷R⁸R⁹R¹⁰] ⁺ (V),

Phosphonium-Kationen der allgemeinen Formel (VI)

[PR⁷R⁸R⁹R¹⁰] ⁺ (VI),

### Imidazolium-Kationen der allgemeinen Formel (VII)

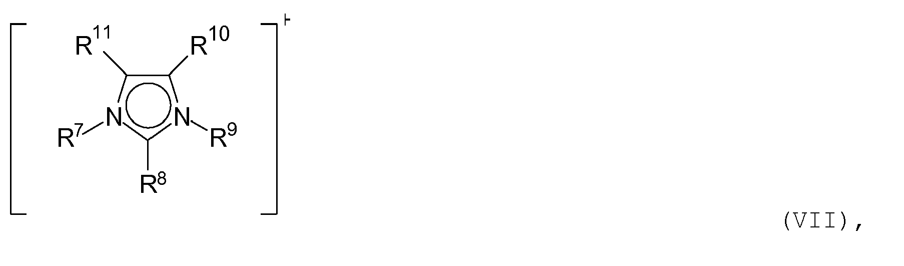

### Pyridinium-Kationen der allgemeinen Formel (VIII)

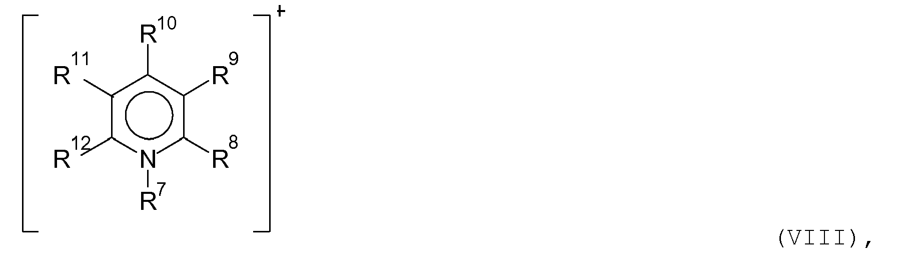

### Pyrazolium-Kationen der allgemeinen Formel (IX)

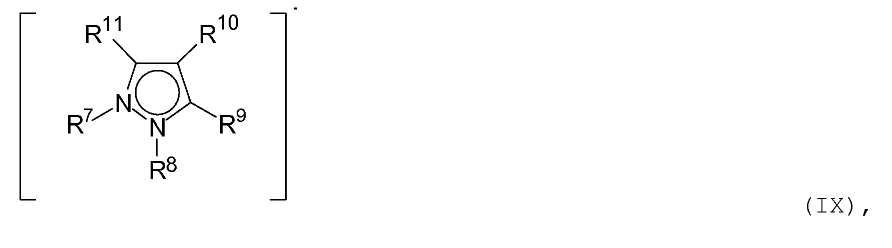

### Triazolium-Kationen der allgemeinen Formel (X)

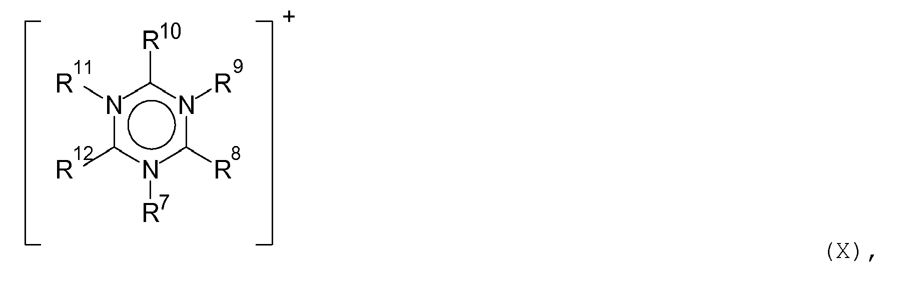

### Picolinium-Kation der allgemeinen Formel (XI)

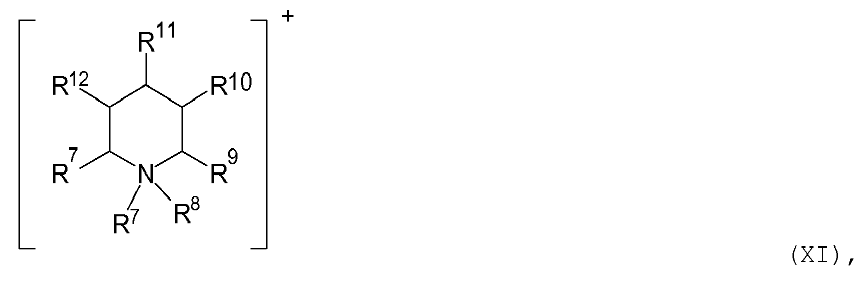

und

### Pyrrolidinium-Kation der allgemeinen Formel (XII)

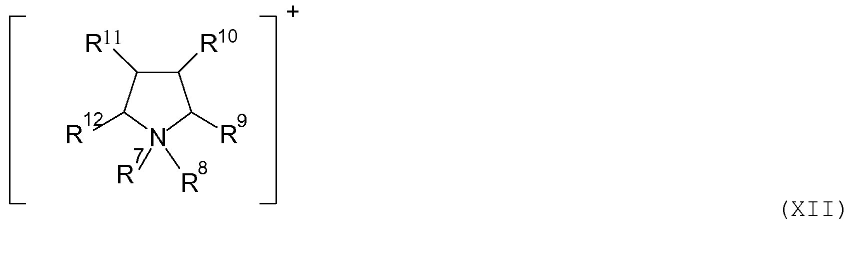

wobei die Reste R⁷⁻¹² jeweils unabhängig voneinander organische Reste mit 1-20 C-Atomen bedeuten.

Die Reste R⁷⁻¹² sind bevorzugt aliphatische, cycloaliphatische, aromatische, araliphatische oder Oligoether-Gruppen.

Aliphatische Gruppen sind dabei geradkettige oder verzweigte Kohlenwasserstoffreste mit ein bis zwanzig Kohlenstoffatomen, wobei in der Kette Heteroatome wie beispielsweise Sauerstoff-, Stickstoff- oder Schwefelatome enthalten sein können.

Die Reste R⁷⁻¹² können gesättigt sein oder eine oder mehrere Doppel- oder Dreifachbindungen aufweisen, welche in der Kette konjugiert oder isoliert vorliegen können.

Beispiele für aliphatische Gruppen sind Kohlenwasserstoffgruppen, die ein bis 14 Kohlenstoffatome aufweisen, beispielsweise Methyl, Ethyl, n-Propyl, Isopropyl, n-Butyl, sec.-Butyl, tert.-Butyl, n-Pentyl, n-Hexyl, n-Octyl oder n-Decyl.

Beispiele für cycloaliphatische Gruppen sind cyclische Kohlenwasserstoffreste, die zwischen drei und zwanzig Kohlenstoffatome aufweisen, wobei sie Ring-Heteroatome enthalten können, wie beispielsweise Sauerstoff-, Stickstoff- oder Schwefelatome. Die cycloaliphatischen Gruppen können ferner gesättigt sein oder eine oder mehrere Doppel- oder Dreifachbindungen aufweisen, die konjugiert oder isoliert im Ring vorliegen können. Gesättigte cycloaliphatische Gruppen, insbesondere gesättigte aliphatische Kohlenwasserstoffe, die fünf bis acht Ringkohlenstoffatome, vorzugsweise fünf und sechs Ringkohlenstoffatome, aufweisen, sind bevorzugt.

Aromatische Gruppen carbocyclisch-aromatische Gruppen oder heterocyclisch-aromatische Gruppen können zwischen sechs und zweiundzwanzig Kohlenstoffatome aufweisen. Beispiele für geeignete aromatische Gruppen sind Phenyl, Naphthyl oder Anthracyl.

Oligoethergruppen sind Gruppen der allgemeinen Formel (XIII)

- [(CH₂)ₓ-O]_{y}-R''' (XIII),

wobei
x und y unabhängig voneinander Zahlen zwischen 1 und 250 sind und
R''' eine aliphatische, cycloaliphatische, aromatische oder araliphatische Gruppe darstellt.

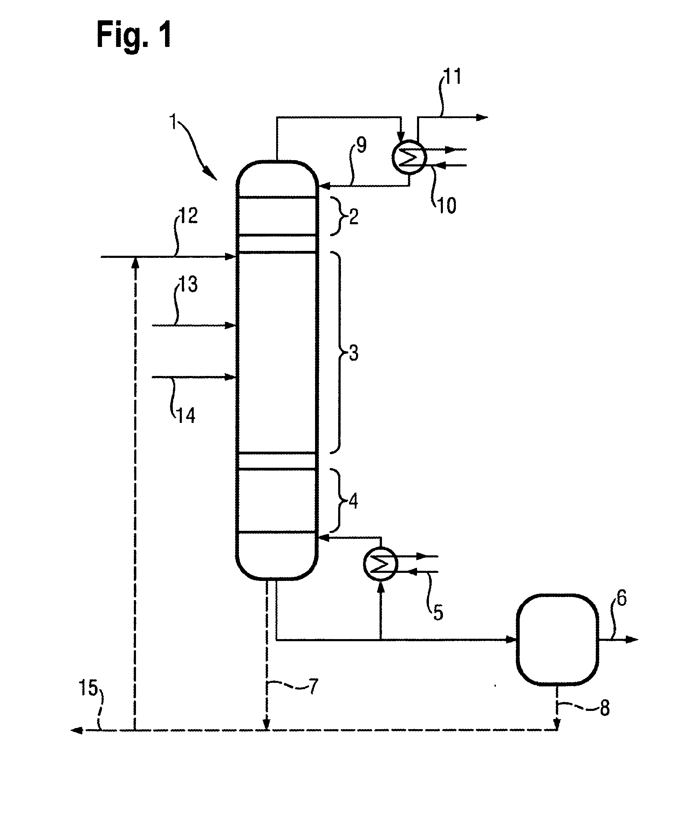

Das erfindungsgemäße Verfahren in einer Reaktionsdestillationskolonne wird in der Zeichnung gemäß Figur 1 schematisch dargestellt.
Dabei tragen die Zahlen aus der Figur 1 die folgende Bedeutung:
- 1:: Reaktionsdestillationskolonne
- 2:: Trennzone
- 3:: Reaktionszone
- 4:: Trennzone
- 5:: Dampf
- 6:: Produkt
- 7:: Variante Katalysatorabtrennung
- 8:: Variante Katalysatorabtrennung
- 9:: Alkenrückführung
- 10:: Kühlwasser
- 11:: Leichtsieder
- 12:: Katalysatorlösung
- 13:: Alken gemäß Formel (III)
- 14:: Silan gemäß Formel (II)
- 15:: Katalysatoraufarbeitung

Als Edukte werden das Alken 13 gemäß Formel (III) und Silan 14 gemäß Formel (II) eingesetzt. Zum Anfahren der Reaktivdestillation werden im ersten Schritt Alken 13 und Produkt 6 vorgelegt und mit totalem Rücklauf und ohne Sumpfabzug das Kolonnenprofil aufgebaut. Im 2. Schritt erfolgte die Zudosierung der Katalysatorlösung 12, des Alekns 13 und des Silans 14. Dann wird die Silan-Menge 14 langsam gesteigert. Es entsteht das Zielprodukt 6 sowie die Nebenprodukte, die gemeinsam als Schwersieder aus dem Sumpf abgezogen werden. Die Prozesssteuerung erfolgt dabei, beispielsweise bei zu geringer Katalysatoraktivität, durch vermehrte Zudosierung von Katalysatorlösung 12. Bei Störungen kann die Katalysator-Dosierung sofort gestoppt werden und somit ist ein Abbrechen der Reaktion möglich. Ein Überschuss an Alken 13 führte zu einer Verbesserung der Selektivität zum Zielprodukt. Für die Abtrennung des Katalysators bestehen zwei Varianten. Bei der Variante 7 erfolgt die Abtrennung direkt im Kolonnensumpf, wenn die Katalysatorlösung eine zweite Phase bildet beispielsweise bei Einsatz von Ionischen Flüssigkeiten. Bei der Variante 8 erfolgt die Abtrennung in einer nachgeschalteten Apparatur beispielsweise in einem Dünnschichtverdampfer oder einem Phasenscheider. Die abgetrennte Katalysatorlösung kann bei ausreichender Katalysatoraktivität wieder in die Reaktionskolonne zugeführt werden oder wird einer anderen Aufarbeitung 15 zugeführt. Die Wiederverwendung von Katalysator ist ein weiterer Vorteil des erfindungsgemäßen Verfahrens.

In einem besonders bevorzugten Verfahren wird der Edelmetallkatalysator oder dessen Lösung in einer der Reaktivdestillationskolonne nachgeschalteten Apparatur, oder in der Kolonne beispielsweise über einen Phasentrenner, von der Silan-Mischung abgetrennt und in die Reaktivdestillationskolonne zurückgeführt bzw. zur Wiederaufarbeitung und Herstellung neuen Katalysators abgetrennt.

Vorzugsweise wird das Verfahren bei einer Reaktionstemperatur von 0-200°C, besonders bevorzugt bei 20 bis 120°C durchgeführt. Der Reaktionsdruck beträgt bevorzugt 0,5-150 bar, besonders bevorzugt 1-20 bar.

### Beispiele

Im Folgenden haben die Abkürzungen folgende Bedeutung:
- AC: Allylchlorid
- BTA: Bistrifluoromethansulfonylimide
- GF12: (3-Chlorpropyl)-Methyldichlorsilan
- GF15: (3-Chlorpropyl)-Trichlorsilan
- HM: Methyldichlorsilan
- KAT-LSG: Katalysatorlösung
- M1: Methyltrichlorsilan
- Pro: Propyltrichlorsilan
- ProMe: Propyl-Methyldichlorsilan
- EMIM: 1-Ethyl-2,3-dimethylimidazolium
- Sitri: Trichlorsilan
- Temp: Temperatur
- Tetra: Tetrachlorsilan

### Beispiel 1

Die Figur 1 zeigt das Schema der Reaktivdestillation, die entsprechend dem Kolonnenprofil aus Tabelle 1 gefahren wird. Dabei wurde als KAT-LSG 12 eine Lösung von PtCl₄ in 1-Dodecen (Pt-Gehalt 0,1 Gew.-%) verwendet. Die Pt-Konzentration in der Kolonne betrug 5 Gew.-ppm. Als Edukte wurden Sitri 14 und AC 13 eingesetzt. Zum Anfahren der Reaktivdestillation wurde im ersten Schritt AC 13 und GF15 vorgelegt und mit totalem Rücklauf und ohne Sumpfabzug das Kolonnenprofil aufgebaut. Im 2. Schritt erfolgte die Zudosierung der Katalysatorlösung 12, von Ac 13 und von Sitri 14. Dann wurde die Sitri-Menge 14 langsam gesteigert. Es entstand als Zielprodukt 6 GF15 sowie die Nebenprodukte Pro und Tetra die zusammen als Schwersieder aus dem Sumpf der Stufe 14 abgezogen wurden. Die Prozesssteuerung erfolgte dabei, beispielsweise bei zu geringer Katalysatoraktivität, durch weitere Zudosierung von Katalysatorlösung 12. Bei Störungen kann die Katalysator-Dosierung sofort gestoppt werden und somit ist ein Abbrechen der Reaktion möglich. Ein Überschuss an AC 13 führte zu einer Verbesserung der Selektivität zum Zielprodukt 6 GF15. Die Katalysatorabtrennung erfolgte über die Variante 8. Eine Katalysatorrückführung wurde nicht durchgeführt sondern der Katalysator wurde einer Aufarbeitung 15 zugeführt.

### Beispiel 2

Die Durchführung erfolgt analog zu Beispiel 1. Der Unterschied liegt in der Immoblisierung des Pt-Katalysators in ionischer Flüssigkeit [EMIM][BTA]. In der ionischen Flüssigkeit als KAT-LSG waren 500 Gew.-ppm Pt bezogen auf den Gesamtfeed als PtCl₄ gelöst. Dabei bildet die ionische Flüssigkeit im Sumpf oder in einer nachgeschalteten Apparatur eine zweite Flüssigphase. Damit ist es möglich den Katalysator in die Reaktivdestillation zurückzuführen, was einen wesentlichen Vorteil dieser Methode darstellt. Die Figur 1 zeigt das Schema dieser Reaktivdestillation, wobei eine Katalysatorrückführung sowohl über die Variante 7 als auch 8 erfolgreich war.

### Beispiel 3

Die Figur 1 zeigt das Schema der Reaktivdestillation, die entsprechend dem Kolonnenprofil aus Tabelle 2 gefahren wird. Dabei wurde als KAT-LSG 12 eine Lösung von [(COD)IrCl]₂ in Chlorbenzol (Ir-Konzentration 1,1 Gew.-%) verwendet. Die Ir-Konzentration in der Kolonne betrug 50 Gew.-ppm Ir. Als Edukte 14 und 13 wurden HM und AC eingesetzt. Zum Anfahren der Reaktivdestillation wurde im ersten Schritt AC und GF12 vorgelegt und mit totalem Rücklauf und ohne Sumpfabzug das Kolonnenprofil aufgebaut. Im 2. Schritt erfolgte die Zudosierung der Katalysatorlösung 12, von AC 13 und von HM 14. Dann wurde die HM-Menge 14 langsam gesteigert. Es entstand das Zielprodukt 6 GF12 sowie die Nebenprodukte ProMe und M1, die zusammen als Schwersieder aus dem Sumpf der Stufe 14 abgezogen wurden. Die Prozesssteuerung erfolgte dabei, beispielsweise bei zu geringer Katalysatoraktivität, durch weitere Zudosierung von Katalysatorlösung 12. Bei Störungen kann die Katalysator-Dosierung sofort gestoppt werden und somit ist ein Abbrechen der Reaktion möglich. Ein Überschuss an AC 13 führte zu einer Verbesserung der Selektivität zum Zielprodukt 6 GF12. Die Katalysatorabtrennung erfolgte über die Variante 8 mit anschließender Aufarbeitung 15. Eine Katalysatorrückführung wurde nicht durchgeführt.

| | **Temp.** | **Druck** | **Hitzeeintrag** | **Flüssigkeitszusammenzetzung [Mol-%]** | | | | | | **AC:sitri** | **Zu- und Abflüsse** |
|---|---|---|---|---|---|---|---|---|---|---|---|
| **Stufe** | **[°C]** | **[bar abs]** | **[kW]** | **SITRI** | **KAT-LSG** | **TETRA** | **CF15** | **PRO** | **AC** | | |
| 1 Kondensator | 76,01 | 2,50 | -74,01 | 0,0021 | 0,0000 | 0,0552 | 0,0000 | 0,0000 | 0,9427 | 447,0 | Abzug: Leichtsieder, 0,5kg/h |
| 2 | 76,30 | 2,50 | 0,00 | 0,0014 | 0,0000 | 0,0764 | 0,0000 | 0,0001 | 0,9222 | 679,7 | |
| 3 | 76,80 | 2,51 | 0,00 | 0,0009 | 0,0000 | 0,1042 | 0,0029 | 0,0009 | 0,8911 | 1039,6 | |
| 4 | 77,71 | 2,51 | 0,00 | 0,0029 | 0,0017 | 0,1376 | 0,0124 | 0,0038 | 0,8417 | 293,9 | Feed: Kat-Lsg, 2,5kg/h |
| 5 | 79,46 | 2,51 | 0,00 | 0,0112 | 0,0016 | 0,1691 | 0,0415 | 0,0134 | 0,7633 | 68,2 | Feed: AC, 175kg/h |
| 6 | 87,50 | 2,51 | 0,00 | 0,0387 | 0,0028 | 0,2027 | 0,1830 | 0,0502 | 0,5226 | 13,5 | |
| 7 | 101,74 | 2,52 | 0,00 | 0,1266 | 0,0041 | 0,1516 | 0,4213 | 0,0929 | 0,2034 | 1,6 | Feed: Sitri, 330kg/h |
| 8 | 124,44 | 2,52 | 0,00 | 0,0437 | 0,0051 | 0,1412 | 0,5698 | 0,1180 | 0,1223 | 2,8 | |
| 9 | 135,65 | 2,52 | 0,00 | 0,0168 | 0,0054 | 0,1381 | 0,6192 | 0,1261 | 0,0945 | 5,6 | |
| 10 | 140,48 | 2,52 | 0,00 | 0,0069 | 0,0055 | 0,1374 | 0,6369 | 0,1290 | 0,0843 | 12,2 | |
| 11 | 142,55 | 2,53 | 0,00 | 0,0029 | 0,0055 | 0,1373 | 0,6438 | 0,1302 | 0,0803 | 27,8 | |
| 12 | 143,44 | 2,53 | 0,00 | 0,0012 | 0,0055 | 0,1373 | 0,6466 | 0,1306 | 0,0787 | 64,3 | |
| 13 | 143,87 | 2,53 | 0,00 | 0,0005 | 0,0055 | 0,1373 | 0,6478 | 0,1309 | 0,0779 | 146,0 | |
| 14 Verdampfer | 145,88 | 2,53 | 0,66 | 0,0005 | 0,0056 | 0,1314 | 0,6576 | 0,1315 | 0,0733 | 151,1 | Abzug: Schwersieder 507kg/h |

| | **Temp.** | **Druck** | **Hitzeeintrag** | **Flüssigkeitszusamensetzung [Mol-%]** | | | | | | **AC:Sitri** | **Zu- und Abflüsse** |
|---|---|---|---|---|---|---|---|---|---|---|---|
| **Stufe** | **[°C]** | **[bar abs]** | **[kW]** | **SITRI** | **KAT-LSG** | **TETRA** | **GF15** | **PRO** | **AC** | | |
| 1 (Kondensator) | 67,42 | 2,00 | -70,45 | 0,0000 | 0,0000 | 0,0028 | 0,0000 | 0,0000 | 0,9972 | 20837,4 | Abzug: Leichtsieder, 0,5kg/h |
| 2 | 67,51 | 2,00 | 0,00 | 0,0000 | 0,0000 | 0,0054 | 0,0000 | 0,0000 | 0,9946 | 23317,2 | |
| 3 | 67,65 | 2,01 | 0,00 | 0,0000 | 0,0002 | 0,0103 | 0,0003 | 0,0000 | 0,9892 | 26060,4 | |
| 4 | 68,03 | 2,01 | 0,00 | 0,0003 | 0,0026 | 0,0194 | 0,0030 | 0,0003 | 0,9744 | 3034,2 | Feed: Kat-Lsg, 2,5kg/h |
| 5 | 69,02 | 2,01 | 0,00 | 0,0029 | 0,0022 | 0,0354 | 0,0206 | 0,0018 | 0,9370 | 321,9 | Feed: AC, 220kg/h |
| 6 | 76,89 | 2,01 | 0,00 | 0,0216 | 0,0043 | 0,0660 | 0,1836 | 0,0120 | 0,7123 | 33,1 | |
| 7 | 103,25 | 2,02 | 0,00 | 0,1024 | 0,0059 | 0,0577 | 0,5600 | 0,0255 | 0,2485 | 2,4 | Feed: Sitri, 330kg/h |
| 8 | 127,04 | 2,02 | 0,00 | 0,0256 | 0,0067 | 0,0610 | 0,7137 | 0,0312 | 0,1618 | 6,3 | |
| 9 | 134,63 | 2,02 | 0,00 | 0,0062 | 0,0068 | 0,0643 | 0,7453 | 0,0326 | 0,1448 | 23,4 | |
| 10 | 136,69 | 2,02 | 0,00 | 0,0015 | 0,0069 | 0,0673 | 0,7519 | 0,0330 | 0,1395 | 93,8 | |
| 11 | 137,60 | 2,03 | 0,00 | 0,0004 | 0,0069 | 0,0717 | 0,7532 | 0,0334 | 0,1344 | 369,8 | |
| 12 | 139,37 | 2,03 | 0,00 | 0,0001 | 0,0072 | 0,0773 | 0,7566 | 0,0350 | 0,1239 | 1316,9 | |
| 13 | 147,30 | 2,03 | 0,00 | 0,0000 | 0,0080 | 0,0741 | 0,7836 | 0,0391 | 0,0951 | 3263,3 | |
| 14 (verdampfer) | 175,15 | 2,03 | 11,92 | 0,0000 | 0,0074 | 0,0391 | 0,8799 | 0,0346 | 0,0390 | 3700,1 | Abzug: Schwersieder 552kg/h |

## Patentansprüche

1. Verfahren zur kontinuierlichen Herstellung von Silan der allgemeinen Formel (I)
R⁶R⁵CH-R⁴CH-SiR¹R²R³ (I) ,
bei dem Silan der allgemeinen Formel (II)
HSiR¹R²R³ (II),
mit Alken der allgemeinen Formel (III)
R⁶R⁵CH=CHR⁴ (III),
wobei
**R¹, R², R³** einen einwertigen Si-C gebundenen, unsubstiturierten oder halogensubstituierten C₁-C₁₈-Kohlenwasserstoff-, Chlor-, oder C₁-C₁₈-Alkoxyrest,
**R⁴, R⁵, R⁶** ein wasserstoffatom, einen einwertigen unsubstituierten oder mit F, Cl, O**R**, N**R**'₂, CN oder NCO substituierten C₁-C₁₈-Kohlenwasserstoff-, Chlor-, Fluor- oder C₁-C₁₈-Alkoxyrest, wobei jeweils 2 Reste von **R⁴, R⁵, R⁶** gemeinsam mit den Kohlenstoffatomen, an die sie gebunden sind, einen zyklischen Rest bilden können,
**R** ein Wasserstoffatom, einen einwertigen C₁-C₁₈-Kohlenwasserstoffrest
bedeuten,
in Gegenwart mindestens eines homogenen Edelmetallkatalysators umgesetzt wird, **dadurch gekennzeichnet, dass** die Umsetzung in einer Reaktivdestillationskolonne und unter kontinuierlicher Dosierung des homogenen Edelmetallkatalysators erfolgt.

2. Verfahren zur Silanherstellung gemäß Anspruch 1, **dadurch gekennzeichnet, dass** der Edelmetallkatalysator in die Reaktivdestillationskolonne zurückgeführt wird.

3. Verfahren zur Silanherstellung gemäß Anspruch 1 oder 2, **dadurch gekennzeichnet, dass** der Edelmetallkatalysator in einer ionischen Flüssigkeit gelöst vorliegt.

4. Verfahren gemäß einem der Ansprüche 1 bis 3, **dadurch gekennzeichnet, dass** der Edelmeltallkatalysator ausgewählt wird aus der Gruppe enthaltend Platin und Iridium.

5. Verfahren gemäß einem der Ansprüche 1 bis 4, **dadurch gekennzeichnet, dass** als Alken der allgemeinen Formel (III) Allylchlorid verwendet wird.

## Claims

1. Process for the continuous preparation of silane of the general formula (I)
R⁶R⁵CH-R⁴CH-SiR¹R²R³ (I)
in which silane of the general formula (II)
HSiR¹R²R³ (II)
with alkene of the general formula (III)
R⁶R⁵CH=CHR⁴ (III)
where
**R¹, R², R³** are each a monovalent Si-C-bonded, unsubstituted or halogen-substituted C₁-C₁₈-hydrocarbon, chlorine or C₁-C₁₈-alkoxy radical,
**R⁴, R⁵. R⁶** are each a hydrogen atom, a monovalent unsubstituted or F-, Cl-, OR-, NR'₂-, CN- or NCO-substituted C₁-C₁₈-hydrocarbon, chlorine, fluorine or C₁-C₁₈-alkoxy radical, where 2 radicals from among **R⁴, R⁵, R⁶** together with the carbon atoms to which they are bound can form a cyclic radical,
**R** is a hydrogen atom, a monovalent C₁-C₁₈-hydrocarbon radical,
in the presence of at least one homogeneous noble metal catalyst, **characterized in that** the reaction is carried out in a reactive distillation column and with continuous introduction of the homogeneous noble metal catalyst.

2. Process for the preparation of silane according to Claim 1, **characterized in that** the noble metal catalyst is recirculated to the reactive distillation column.

3. Process for the preparation of silane according to Claim 1 or 2, **characterized in that** the noble metal catalyst is present as a solution in an ionic liquid.

4. Process according to any of Claims 1 to 3, **characterized in that** the noble metal catalyst is selected from the group consisting of platinum and iridium.

5. Process according to any of Claims 1 to 4, **characterized in that** allyl chloride is used as alkene of the general formula (III).

## Revendications

1. Procédé pour la production continue d'un silane de formule générale (I)
R⁶R⁵CH-R⁴CH-SiR¹R²R³ (I)
dans lequel on fait réagir le silane de formule générale (II)
HSiR¹R²R³ (II)
avec un alcène de formule générale (III)
R⁶R⁵ CH=CHR⁴ (III),
où
**R¹, R², R³** représentent un atome de chlore ou un radical hydrocarboné en C₁-C₁₈ ou alcoxy en C₁-C₁₈, monovalent, lié à Si, non substitué ou substitué par halogène
**R⁴, R⁵, R⁶** représentent un atome d'hydrogène, de chlore ou de fluor ou un radical hydrocarboné en C₁-C₁₈ ou alcoxy en C₁-C₁₈, monovalent, non substitué ou substitué par F, Cl, O**R**, **NR**'₂, CN ou NCO, 2 des radicaux **R⁴, R⁵, R⁶** pouvant chaque fois former, conjointement avec les atomes de carbone auxquels ils sont fixés, un radical cyclique,
**R** représente un atome de carbone, un radical hydrocarboné en C₁-C₁₈ monovalent,
en présence d'au moins un catalyseur homogène à métal noble, **caractérisé en ce qu'**on effectue la réaction dans une colonne de distillation réactive et avec addition dosée continue du catalyseur homogène à métal noble.

2. Procédé pour la production d'un silane selon la revendication 1, **caractérisé en ce que** le catalyseur à métal noble est renvoyé dans la colonne de distillation réactive.

3. Procédé pour la production d'un silane selon la revendication 1 ou 2, **caractérisé en ce que** le catalyseur à métal noble est présent dissous dans un liquide ionique.

4. Procédé selon l'une quelconque des revendications 1 à 3, **caractérisé en ce que** le catalyseur à métal noble est choisi parmi le platine et l'iridium.

5. Procédé selon l'une quelconque des revendications 1 à 4, **caractérisé en ce qu'**on utilise comme alcène de formule générale (III) du chlorure d'allyle.
